# EUROPEAN PATENT SPECIFICATION

(11) **EP 2 126 515 B1**
(45) Date of publication and mention of the grant of the patent: **05.12.2018**
(21) Application number: 08705827.7
(22) Date of filing: 09.01.2008
(51) Int. Cl.: G01C 21/34, G01C 21/36

(54) **ROUTE SHAPING SYSTEMS AND METHODS**
ROUTENFORMUNGSSYSTEME UND VERFAHREN
SYSTÈMES ET PROCÉDÉS DE DÉTERMINATION D'ITINÉRAIRE

(30) Priority: 28.02.2007 US 892146 P; 14.06.2007 US 763331
(43) Date of publication of application: 02.12.2009
(73) Proprietor: Garmin Switzerland GmbH, 8200 Schaffhausen (CH)
(72) Inventor: BOLTON, Kenneth, Olathe, KS 66062 (US); LAZARUS, Gregory, Olathe, KS 66062 (US); LUTZ, Pascal, Leawood, KS 66224 (US); CAIRE, Jacob, Olathe, KS 66062 (US)
(74) Representative: Bird & Bird LLP
(86) International application number: PCT/US2008/050666
(87) International publication number: WO 2008/106242

(56) References cited:
- EP-A1- 1 693 647
- EP-A2- 1 494 193
- US-A- 5 977 885
- US-A1- 2004 049 335
- US-A1- 2005 021 228

## Description

### BACKGROUND OF THE INVENTION

The present invention is related to navigation devices that enable a user to navigate a road network from a starting point to a destination and more particularly to a system and method suitable for used by a navigation device for shaping a route through a location, while not routing the user to that location as a destination.

Navigation devices, particularly those designed for use in automobiles; enable a user to navigate a road network from a starting point to a destination. The devices monitor their current position and provide turn-by-turn instructions to the user. Many navigation devices allow a user to identify a starting point and a destination and later add an intermediate stop between the starting point and the destination. The devices then determine a route from the starting point to the intermediate stop and from the intermediate stop to the destination. Alternately, a user can add a second destination, and the device determines a route from the starting point to the destination and from the destination to the second destination.

When multiple destinations for a route are identified, navigation devices treat each portion of the route as if it has a starting point and a destination. The devices provide the route to the specific destination address, or point of interest (POI), the device expects the user to travel to the specific destination and stop at the destination. Many such navigation devices consider the user to be off route unless that destination actually is reached.

Many navigation devices enable a user to request an alternate route. For example, the device may identify a preferred route between a starting point and a destination, and the user may request a different route between the same points. If another route is available, the device will calculate the alternate route. However, the device still provides a route to a specific destination address or point of interest and expects the user to travel to the specific destination and stop at the destination. For example, a user may want to navigate from Kansas City to Chicago. The navigation device provides a route between Kansas City and Chicago through St. Louis. The user may determine that an alternate route would be preferable, such as through Des Moines. Such a route may not be available as an alternate route, and the user would have to enter Des Moines as an additional stop. The device treats Des Moines as an intermediate "destination" and, for example, selects a route to the center of Des Moines for a first portion of the route and from the center of Des Moines to Chicago for a second portion of the route. The resulting route may take the user off major highways and onto local streets in Des Moines to the first "destination" and then through other local streets and back onto a highway to get to Chicago. However, in this example, the user does not wish to go to the center of Des Moines and does not want to exit the highway. The user merely wants to take a trip to Chicago via Des Moines instead of via St. Louis. EP1494193 A2 discloses a navigation device adapted to determine a route that passes through an area around an intermediate destination.

EP1693647 discloses a navigation device adapted to determine a route within three different areas associated with different road classes.

Consequently, it would be desirable to provide a navigation device that enables a user to shape a route through a location such as a city, address, landmark, area, point of interest, or the like, while not routing the user to that shape location as a destination.

### SUMMARY OF THE INVENTION

The present invention concerns a system according to claim 1.

In embodiments of the invention, the current location is determined, and the route is output from the current location. In such embodiments, the current location may be determined by processing global positioning system (GPS) signals.

In specific embodiments, the shape location and the destination may be received through voice entry and/or display (e.g. using automatic speech recognition techniques (ASR), or the like.), touch screen, external remote data, or other input technology.

### BRIEF DESCRIPTION OF THE DRAWINGS

Various embodiments of the present invention are described in detail below with reference to the attached drawing figures, wherein:
FIG. 1 is a block diagram of a route shaping system in accordance with an embodiment of the present invention;
FIG. 2 is a flow diagram of a route shaping method in accordance with an embodiment of the present invention;
FIG. 3 is a flow diagram of another route shaping method in accordance with an embodiment of the present invention;
FIG. 4 is a flow diagram of another route shaping method in accordance with an embodiment of the present invention;
FIG. 5 is a flow diagram of another route shaping method in accordance with an embodiment of the present invention;
FIGS. 6 through 10 are screen displays for a user interface used for route shaping in accordance with an embodiment of the present invention; and
FIG. 11 is a block diagram of another route shaping system in accordance with an embodiment of the present invention.

### DETAILED DESCRIPTION

Systems and methods of the present invention enable a user to shape a navigation route through a selected location without requiring the route to navigate to the location as a destination point or conditional stop. In one aspect, a navigation device determines a route that gravitates toward a selected shape location while not routing to the location. In this aspect, the route generally is pulled toward the shape location, but the most efficient route through or near the shape location is selected. For example, a route is selected that skirts a city identified as a shape location so that highway travel is maintained to a final destination. In another example, a route is selected that navigates through an intersection or by a point of interest (POI) identified as a shape location, but does not require a stop or deviation to the intersection or POI. A shape location can be an address, an intersection, a city, a state, a point of interest, such as a park, a store, a restaurant, a hotel, or another point of interest, or another point, location, or area. As used herein with respect to the shape location, "through" means to pass through, approximately through, or near the shape location but not to the shape location as a stop or destination.

In another aspect, a navigation device has map data of one or more road networks. The road networks have road segments, which are sometimes referred to as links. The road segments each have a road class, such as interstate, major highway, state highway, arterial, collector, residential, alley, ramp, unpaved, or other road class designations. The navigation device identifies the highest road class that corresponds to an entry for a shape location and determines the best route based on the highest road class. In one example, a user interface enables a user to zoom in and out of one or more maps generated to a display and identify the shape location on the map. The navigation device uses the relative size of the map area for the zoom level to identify an area of interest (interest area) around the shape location and determines a route from the current location to the destination with the highest road class through the interest area. The navigation device then outputs the entire route. In another example, a user interface enables a user to enter a shape location using speech and speech recognition. A relative interest area corresponding to the speech entry for the shape location is identified. For example, a speech entry of a city will correspond to a different interest area than a speech entry of an intersection. In this example, the interest area for the city may be five miles, while the area of interest for the intersection may be five hundred feet. A route from the interest area to the destination with the highest road class through the interest area is determined. The navigation device also outputs the entire route. Other examples exist. As used herein with respect to the interest area, "through" means to pass through, approximately through, or near the interest area but not to the interest area as a stop or destination.

In another aspect, multiple potential links exist from the starting or current location through the interest area to the destination. The navigation device explores the potential different links and identifies the best route through the interest area to the destination.

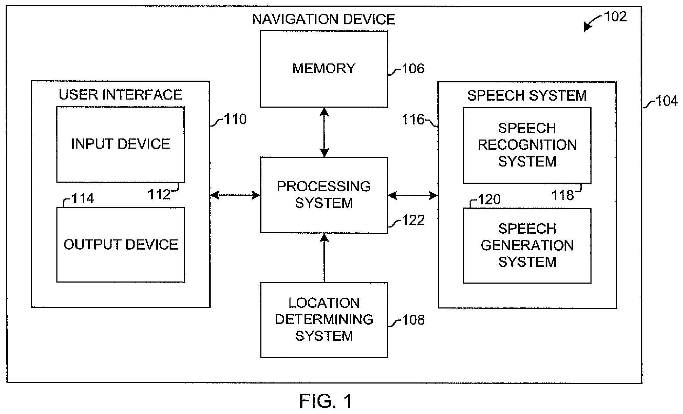

FIG. 1 depicts a route shaping system 102 in accordance with an exemplary embodiment of the present invention. The route shaping system 102 can be included in a portable navigation device 104, such as an automobile or other vehicle navigation device, or another navigation system or device. Alternately, the route shaping system 102 can be included in one or more integral or distributed systems, such as a telephone system, computer system, or the like. In such embodiments, the navigation device may comprise a telephone, PDA or like device which communicates with an external system such as a cellular telephone system, wireless network, or the like via a wireless communication device (e.g., receiver and transmitter or transceiver).

The route shaping system 102 includes memory 106 for storing map data for one or more geographic areas. The map data includes data for one or more road networks having one or more road segments, which are sometimes referred to as links. Each road segment has an associated road class, which identifies the type of road and other criteria associated with the road, such as the traffic volume, the travel time, and/or the distance of the road segment. Other examples exist. Different methods are used to identify a road class for different geographic areas. In one example, road segments are classified as rural or urban, arterials, collectors, and local, where arterials are the highest road class and local roads are the lowest road class. In another example, roads are classified in order as interstate, major highway, state highway, arterial, collector, residential, alley, ramp, and unpaved, where interstate is the highest road class and unpaved is the lowest road class. Other examples include greater, fewer, or different road classifications or a combination or subset of the foregoing examples. Other examples exist.

The memory 106 also may include other map data for a geographic area, such as points of interest, geographic features, address data, coordinate data, geocaching and/or geocoding data, alert locations, terrain data, geographic entities, and/or other map data. The memory 106 may store destinations, shape locations, and previously determined or otherwise acquired routes.

The memory 106 also stores data, data structures, user preference information, other user information, device security information, operating parameter data, and/or other processing data for the route shaping system 102. The memory 106 may be used to store programming, including software, firmware, and/or other programming or algorithms used by the route shaping system 102.

The memory 106 may include temporary, permanent, and/or semi-permanent memory, including volatile and/or non-volatile memory. In one example, the memory 106 includes removable and/or non-removable memory, such as random access memory, read only memory, EEPROMs, Flash memory, such as secure digital (SD) memory, universal serial bus (USB) memory devices, magnetic memory, optical memory, and/or other memory. Other examples exist.

. In embodiments wherein the navigation device communicates with an external system such as a cellular telephone system, wireless network, or the like via a wireless communication device, some or all of the map data may be received via the wireless communication device from the external system instead of or prior to being stored in the memory 106.

A location determining system 108 determines the current geographic location of the route shaping system 102 or accesses or receives location information used to identify the current location of the route shaping system. In one embodiment, the location determining system 108 includes a global positioning system (GPS) receiver for receiving GPS signals used to determine the current location, continuous position, velocity, time, and/or direction of the route shaping system 102. A GPS antenna may be included with the GPS receiver. Other GPS components and/or other GPS systems may be used. Other satellite-based systems that use location determining signals or other positioning signals may be used. Other examples exist.

In another embodiment, the location determining system 108 includes a dead reckoning system for identifying a current location and direction of the route shaping system 102. In this example, the current location is determined from a distance traveled and information identifying the direction of travel.

In embodiments of the invention, the location determining system 108 may receive wireless communication signals, such as from a cellular telephone system, wireless communication system, or the like. In one example of this embodiment, the location determining system 108 triangulates the current position and direction of travel based upon the received wireless communication signals. In another example, the location determining system 108 processes specific geographic identification information in the wireless communications to identify the current location, such as through the location of a cellular tower or other wireless communication system. In these examples, the wireless communication signals are location determining signals.

A user interface 110 enables a user to input data, such as a destination, a shape location, user preference data, routing and navigation commands, other navigation data, device security information, device operational parameters, and/or other data. In one embodiment, the user interface 110 enables a user to enter a shape location, a destination, and other data through a display, such as on or for a map. Other commands and data may be received through a display, such as a shape route command, route shaping data and instructions, navigation data and instructions, browsing, and other commands.

In another embodiment, the input device 112 enables the user to enter a shape location, a destination, and other data through speech or another audio input. Other speech and speech commands may be received, including navigation commands, operational commands, and other commands. Examples of some speech commands include shape route, navigate, route to, then to, route through, route to destination through shape location, route to destination then to destination, route to destination through shape location and through shape location, avoid, prefer this road next time, and other speech commands. Other examples exist.

The user interface 110 also generates route information, navigation and guidance messages and/or displays, other navigation information, and other data associated with the route shaping system 102 for output to the user. In some embodiments, the user interface 110 includes display screens to identify routes and other navigation information, including maps, other images, and/or text identifying routing information. In other embodiments, the user interface 110 generates data as speech or other audio. The audio outputs include routing instructions, other navigation commands, operational parameters, and/or other information associated with the route shaping system 102. The user interface 110 includes software, firmware, and/or hardware.

The user interface 110 may include an input device 112. The input device 112 enables a user to enter the destination, shape location, and/or other data for the route shaping system 102. Examples of input devices 112 include a touch screen or display, a mouse, a pointer, a track ball, a keyboard, a microphone, another audio input, a wireless or wired communication device, and/or other input devices.

The user interface may include an output device 114. The output device renders a route, such as through a display or speech. The output device 114 outputs other data identifying the current location, destination, shape location, one or more road segments for one or more routes, map data, user data, and/or other data. Examples of an output device 114 include a touch screen or other display, one or more screen displays, a speaker or other audio output, generated speech, tones, and/or other output devices.

In one embodiment, the user interface 110 includes both an input device 112 and an output device 114. In another example, the input device 112 and the output device 114 are combined, such as in a touch screen. In another example, the combined input and output devices 112 and 114 also include other input and/or output devices, such as a microphone and a speaker.

The speech system 116 processes speech components received from the user interface 110 and/or generated to the user interface. The speech system 116 optionally may include a speech recognition system 118 to process received speech and/or a speech generation system 120 to synthesize or otherwise generate speech. The speech system 116 is optional for some embodiments.

A processing system 122 controls the operation of the route shaping system 102. The processing system 122 communicates with the memory 106, the location determining system 108, the user interface 110, and the optional speech system 116. The processing system 122 includes one or more processors and can be embodied in one or more distributed or integral components or systems.

The processor communicates with the memory 106 to store, retrieve, and process data. The data may be received from the location determining system 108, the user interface 110, and/or the speech determining system 116 prior to processing and/or storage. Data may be transmitted to the user interface 110 and/or the speech system 116 upon processing and/or retrieval.

The processing system 122 receives data from the location determining system 108, such as GPS signals, communication signals, or other location determining signals or data. The processing system 122 processes the GPS signals or other location data to identify a current location of the route shaping system 102, a continuous location, a speed of travel, a direction of travel, a time, and/or other navigation information associated with the route shaping system.

The processing system 122 receives data from and transmits data to the user interface 110. In one embodiment, the processing system 122 receives input data such as a shape location, a destination, user preferences, or other information and processes the input information to determine a route from a current position approximately through or near one or more shape locations and/or interest areas and to one or more destinations. In one aspect, the processing system 122 receives inputs from a screen display. In another aspect, the processing system 122 receives speech components from the user interface 110 and operates with the speech recognition system 118 to process the speech components. Other examples exist.

The processing system 122 generates routes, route information, other navigation information, and other operational information for the route shaping system 102 to the user interface 110 for output to the user. In one embodiment, the processing system 122 generates data for screen displays to the user interface 110. The screen displays may include maps, other images and/or text to identify one or more routes and navigation for one or more routes, and/or other information for the route shaping system 102. In another embodiment, the processing system 122 operates with the speech generation system 120 to generate speech components to the user interface 110 for output to the user to identify one or more routes and navigation for one or more routes and/or other information for the route shaping system 102. In other embodiments, the processing system 122 generates other audio information, such as tones, to the user interface 110 for output to the user.

The processing system 122 accepts inputs, including inputs for the shape location and the destination. Whether the shape location is entered from a display, by speech, or using another method or device, the shape location has a scale. The scale is a level of map data detail. For example, a user may zoom into and out of a display screen. If the user selects the shape location on the display, the scale is identified by the zoom level of the screen display. If the user enters a shape location through speech, the shape location is processed to identify its scale.

The processing system 122 determines one or more interest areas that correspond to a shape location. The interest area is an area around or about the shape location that contains road segments and other map data through which the route is determined.

In one aspect, the processing system 122 determines the interest area relative to the scale of the entered shape location. If the shape location is a city, the scale is larger and the interest area is larger. If the shape location is a street level, the scale is smaller, and the interest area is smaller. In one example, if the scale of the shape location is for a city, the interest area is fifty miles. If the scale of the shape location is for a street level, such as for an intersection, a POI, or an address, the interest area is five hundred feet. Other examples exist.

In another aspect, the shape location has a spatial type that identifies or corresponds to its area or boundaries. For example, the shape location may be a state, a city, an intersection, a point of interest (POI), an address, another point, or another type of shape location. A state, a city, an intersection, a POI, an address, and other points each have boundaries that identify its spatial type. A state is larger and has a spatial type that is different than a city, which is smaller. A street level is smaller than the city and has a third spatial type. The processing system 122 identifies the spatial type of the shape location. In this embodiment, the processing system 122 correlates the spatial type of the shape location to a scale for an interest area.

In another aspect, the interest area is based on the type of shape location (shape location type). In this aspect, the interest area may be the shape location itself. In one example, the interest area for a city shape location type is the city itself, not a further distance around or from the city. Therefore, the interest area shares the same borders and area with the shape location. In another example, the interest area for a state location type is the state itself. In another example, the interest area for an intersection, an address, a POI, or another point is a distance around or about the shape location. In this example, the border for the interest area is a distance and/or shape different from the shape location, such as extending out from the shape location. Examples of shape location types are country, state, county, province, city, area, intersection, address, and POI. Other examples exist.

In another aspect, a default interest area is selected based on the scale of the shape location. For example, if the scale of the shape location is a city, the interest area is fifty miles. If the scale of the shape location is an intersection, a POI, or an address, the interest area is five hundred feet. In one aspect, the processing system 122 processes a lookup table to identify the interest area based on the scale. In another embodiment, the interest area is larger or smaller depending on navigation factors, such as road classes in the interest area, length of road segments, user preferences, and/or other factors. Other examples exist.

In still another aspect, the interest area is a circular area with a radius from the shape location. In other embodiments, other types of interest areas are used, including rectangular areas, irregular shaped areas, other spatial or geographic areas, non-contiguous areas, and noncontinuous areas. The interest area need not be of any particular geographic shape or area for some embodiments. The shape location need not be in the center of the interest area for some embodiments, and the interest area is not required to be contiguous or continuous for some embodiments.

In one embodiment, the processing system 122 generates screens for display, including maps. A user is able to zoom into and out of the maps at different levels and select a shape location. The shape location is identified on the map relative to the scale, which in this instance is identified by the zoom level of the map. The interest area also is determined relative to the scale of the map display. In one example, the user zooms out of a map display to an area that includes a state and selects a city as the shape location. The interest area is determined for an area around the city relative to the scale of the map display for the shape location. In another example, the user zooms into a map display to an area that includes a neighborhood or street level and selects an intersection as the shape location. The interest area is determined for an area around the intersection relative to the scale of the map display for the shape location. In another example, the user zooms into a map display further to an area that includes a more detailed street level map and selects an address or a POI as the shape location. The interest area is determined for an area around the address or POI relative to the scale of the map display for the shape location. Other examples exist.

In another embodiment, the processing system 122 accepts speech inputs, including inputs for the shape location and the destination. The processing system 122 determines the scale of the entered shape location and determines an interest area relative to the scale of the entered shape location.

The processing system 122 identifies the highest road class for one or more road segments through an interest area and selects the highest road class for a route. The selected road class may be higher when the scale of the shape location is higher and the interest area is larger. Conversely, the selected road class may be lower when the scale of the shape location is lower and the interest area is smaller. For example, the scale for a city is higher and the interest area around the city is larger than for a street level, which results in the road class for that interest area being higher. In another example, the road class for an interest area encompassing a state is higher than an interest area encompassing a street level.

The processing system 122 explores potential routes based on the current location or other starting location to the destination through one or more shape locations and/or interest areas and identifies one or more road segments for the route. One or more methods may be used, such as fanning out from a starting point to identify all potential links to a next point. The processing system 122 selects the highest road class from the potential links through the shape location and/or the interest area.

Optionally, if multiple routes are available with the same highest road class, the distance of one or more road segments is used as a factor, and the shortest route with the highest road class through the interest area is selected. For example, if a highway class is the highest road class through the interest area and three highways all go through the interest area, the highway having the shortest route through the interest area to the destination is selected. In this example, the distance between the starting or current location through the interest area to the destination is used to select the route. Alternately, a combination of the highest road class and one or more user preferences can be used to select one or more road segments through the interest area, such as a distance of a road segment or route, the shortest road segment or route, the fastest road segment or route, avoiding a particular road or class of roads, avoiding construction, only using a selected road class, using a user-preferred highway or road, and/or another user preference.

In one example, a road class includes interstate, major highway, state highway, arterial, collector, residential, alley, ramp, and unpaved. A destination and a shape location are identified, and the processing system 122 determines the current location. In this example, the shape location is a point of interest, such as a restaurant. The processing system 122 determines the interest area relative to the scale of the shape location. Multiple potential routes exist from the current location through the interest area for the shape location to the destination, including a first route having road segments for two state highways and a collector, a second route having road segments for three state highways and a collector, and a third route having multiple collector road segments. In this example, the route having road segments for two state highways and a collector has the highest road class, is the shortest route, and is selected. In this example, the restaurant is between the first and second highways, and the route does not exit the highway for a road segment to the restaurant.

In this example, the processing system 122 does not expect the route to stop at the restaurant, as is the case with intermediate or additional stops or destinations in other systems. Further, the route does not display or announce the restaurant during the route and does not display or announce an arrival at the restaurant since it is not a stop or destination.

In one aspect, the processing system 122 uses the highest road class only to determine a route through the shape location. Other navigation factors are used to determine other road segments in the route, such as the shortest route, the fastest route, and/or user preferences. In another aspect, the processing system 122 uses the highest road class only to determine a route through the interest area, and other navigation factors are used to determine other road segments in the route. In another aspect, the processing system 122 uses the highest road class only to determine a route through the interest area and through the shape location, and other navigation factors are used to determine other road segments in the route. In another aspect, the processing system 122 uses the highest road class for one or more road segments in the route, including road segments from the current location through the interest area to the destination.

In another aspect, the processing system 122 determines a route based on a combination of the highest route class through an interest area and other navigation factors. Navigation factors may include the highest road class in a user preferred road class, the length of a route or road segment, start and end points of potential road segments, the fastest route or road segment, whether a route segment is efficient based on stops, turns, or entering or exiting a highway, interstate, or other road, avoidance preferences such as avoiding tolls roads or other roads or points, other user preferences, and/or other factors. In one example, two potential routes are determined through a town. One route includes a road segment over a highway. Another route includes an access road next to the highway. The processing system 122 factors the highest road class through the interest area with the navigation factors, including the entire length of the route, the start points and end points for each potential route segment, and the user preferences (if any), to determine if the route should include the highway or the access road. In one example, the processing system 122 performs a partial calculation of a route from a current location through the shape location for the highway road segment and the access road. Based on the navigation factors, the processing system 122 selects the access road segment because the access road does not require entering and exiting a highway and is the highest road class in a user preferred road class.

In another aspect, the processing system 122 calculates the top X number of potential routes or road segments, where X is a selected number, such as 3, 5, or another number. The processing system then selects the route. In one example, the processing system calculates potential routes for the top three road classes, including a state highway, a collector, and an unpaved road. The processing system 122 selects the best route based on the user preferences, including a user preference for a particular road class or a user preferences for the shortest route.

Multiple shape locations can be used for a route. A shape location can be used to determine one or more road segments at any point in the route, including multiple shape locations between a starting or current location and the destination, shape locations between a starting or current location and multiple destinations, and shape locations between multiple starting or current locations and multiple destinations. The processing system 122 determines a scale and interest area for each shape location and determines a route through each shape location or interest area.

If a potential route has the highest road class, but the potential route does not navigate to the destination, the processing system 122 can be configured to select the next lower level road class for road segments that can route to the destination. If a potential route has the highest road class, but the potential route does not navigate between two points or over a desired road segment, the processing system 122 selects the next lower level road class for road segments that can route between the two points or over the desired road segment.

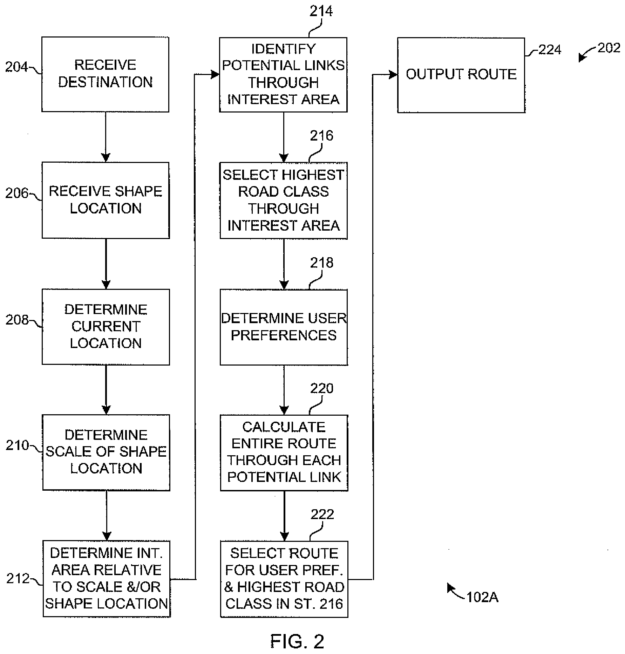

FIG. 2 depicts an exemplary embodiment of a route shaping method 202 for a route shaping system 102A. The route shaping method 202 may be implemented in a portable navigation device or another navigation system or device.

The destination and shape locations are received at steps 204-206, and the current location is determined at step 208. Steps 204-208 may be performed in any order. The destination and shape locations may be received through a user interface or other input device, including through a display, a screen, a pointer, or speech input.

The scale of the shape location is determined at step 210, and the interest area is determined relative to the scale of the shape location and/or the shape location type at step 212. One or more potential road segments (links) through the interest area are identified at step 214, and the link having the highest road class from the potential links through the interest area is selected at step 216. If any user preferences are to be factored into the route calculation, they are determined at step 218. In some instances, user preferences are not factored into the route calculation. The entire route from the starting or current location through the interest area to the destination is calculated for each potential link at step 220. From the potential links, a route is selected from the starting or current location through the interest area to the destination at step 222, and the route includes the link with the highest road class selected in step 216. In some instances of step 216, the route also is selected based on user preferences, such as the fastest route, the shortest route, or other user preferences. The route is output at step 224, such as from the current location through a display and/or speech.

Multiple shape locations may be entered. The route shaping method 202 can determine a route from one interest area to another interest area. Alternately, the route shaping method 202 can determine a route from a current location through an interest area to an intermediate destination and then through another interest area to another destination. Additional shape locations may be added to the route.

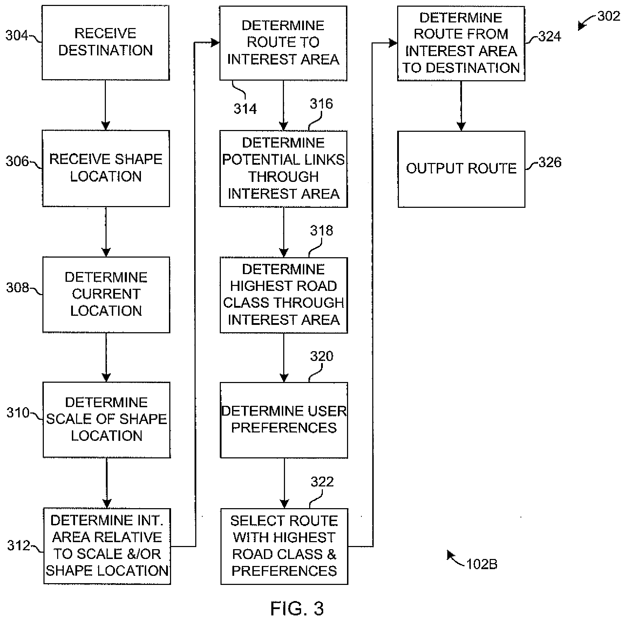

FIG. 3 depicts an exemplary embodiment of a route shaping method 302 for a route shaping system 102B. The route shaping method 302 may be implemented in a portable navigation device or another navigation system or device.

The destination and shape locations are received at steps 304-306, and the current location is determined at step 308. Steps 304-308 may be performed in any order. The destination and shape locations may be received through a user interface or other input device, including through a display, a screen, a pointer, or speech input.

The scale of the shape location is determined at step 310, and the interest area is determined relative to the scale of the shape location and/or the shape location type at step 312. One or more road segments (links) are determined from the starting or current location to the interest area at step 314. Potential links through the interest area are identified at step 316, and the highest road class for the potential links through the interest area is determined at step 318. If any user preferences are to be factored into the route calculation, they are determined at step 320. In some instances, user preferences are not factored into the route calculation. The route through the interest area is selected based on the highest road class and the user preferences at step 322. In other instances, the route through the interest area is selected based only on the highest road class. One or more links are determined from the interest area to the destination at step 324. The route is output at step 326, such as such as from the current location through a display and/or speech.

Multiple shape locations may be entered. The route shaping method 302 can determine a route from one interest area to another interest area. Alternately, the route shaping method 302 can determine a route from a current location through an interest area to an intermediate destination and then through another interest area to another destination. Additional shape locations may be added to the route.

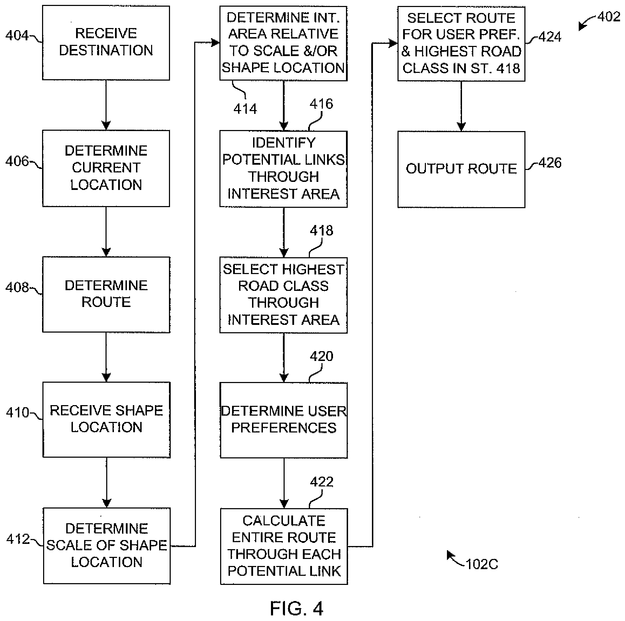

FIG. 4 depicts another exemplary embodiment of a route shaping method 402 for a route shaping system 102C. The route shaping method 402 may be implemented in a portable navigation device or another navigation system or device.

The destination location is received and the current location is determined at steps 404-406. Steps 404 through 406 may be performed in any order. The destination location may be received through a user interface or other input device, including through a display, a screen, a pointer, or speech input. A route is determined at step 408.

A shape location is received at step 410. The shape location may be received through a user interface or other input device, including through a display, a screen, a pointer, or speech input. The scale of the shape location is determined at step 412, and the interest area is determined relative to the scale of the shape location and/or the shape location type at step 414. One or more potential road segments (links) through the interest area are identified at step 416, and the link having the highest road class from the potential links through the interest area is selected at step 418. If any user preferences are to be factored into the route calculation, they are determined at step 420. In some instances, user preferences are not factored into the route calculation. The entire route from the starting or current location through the interest area to the destination is calculated for each potential link at step 422. From the potential links, a route is selected from the starting or current location through the interest area to the destination at step 424, and the route includes the link with the highest road class selected in step 418. In some instances of step 424, the route is selected based on user preferences, such as the fastest route, the shortest route, or other user preferences. The route is output at step 426, such as such as from the current location through a display and/or speech.

Multiple shape locations may be entered. The route shaping method 402 can determine a route from one interest area to another interest area. Alternately, the route shaping method 402 can determine a route from a current location through an interest area to an intermediate destination and then through another interest area to another destination. Additional shape locations may be added to the route.

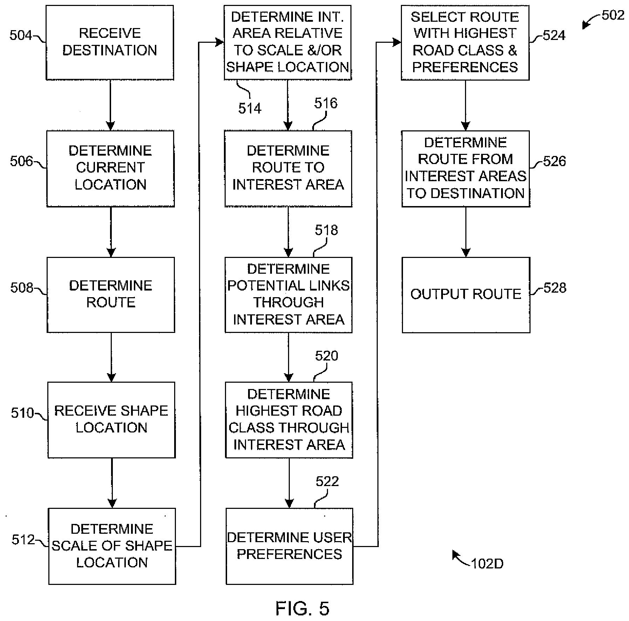

FIG. 5 depicts another exemplary embodiment of a route shaping method 502 for a route shaping system 102D. The route shaping method 502 may be implemented in a portable navigation device or another navigation system or device.

The destination location is received and the current location is determined at steps 504-506. Steps 504-506 may be performed in any order. The destination location may be received through a user interface or other input device, including through a display, a screen, a pointer, or speech input. A route is determined at step 508.

A shape location is received at step 510. The shape location may be received through a user interface or other input device, including through a display, a screen, a pointer, or speech input. The scale of the shape location is determined at step 512, and the interest area is determined relative to the scale of the shape location and/or the shape location type at step 514. One or more road segments (links) are determined from the starting or current location to the interest area at step 516. Potential links through the interest area are determined at step 518. The highest road class for the potential links through the interest area is determined at step 520. If any user preferences are to be factored into the route calculation, they are determined at step 522. In some instances, user preferences are not factored into the route calculation. The route through the interest area is selected based on the highest road class and the user preferences at step 524. In other instances, the route through the interest area is selected based only on the highest road class. One or more links are determined from the interest area to the destination at step 526. The route is output at step 528, such as such as from the current location through a display and/or speech.

Multiple shape locations may be entered. The route shaping method 502 can determine a route from one interest area to another interest area. Alternately, the route shaping method 502 can determine a route from a current location through an interest area to an intermediate destination and then through another interest area to another destination. Additional shape locations may be added to the route.

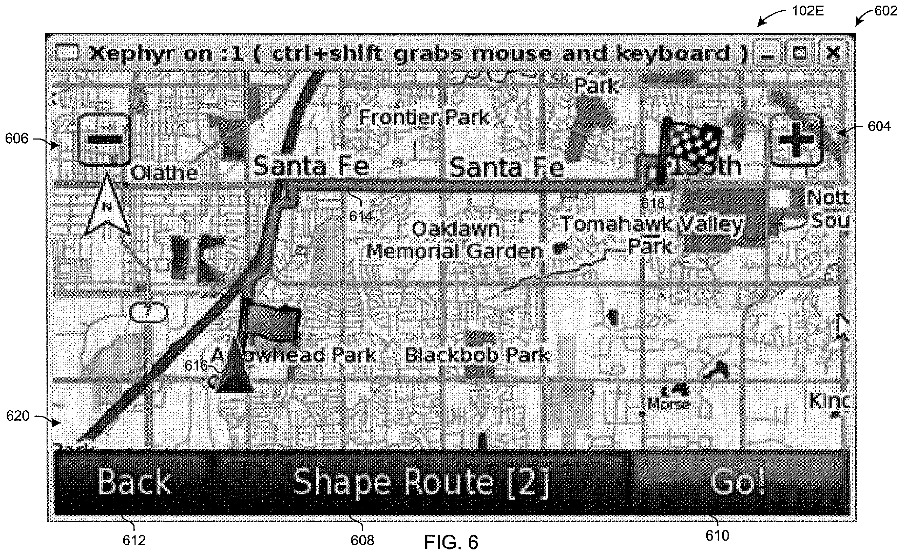

FIGS. 6 through 10 depict exemplary embodiments of screen displays generated for a user interface of a route shaping system 102E. Other examples exist.

FIG. 6 depicts a screen display 602 having a zoom in control 604, a zoom out control 606, a shape route control 608 to initiate the route shaping for entry of one or more shape locations, a go control 610 to cause a route with one or more shape locations to be determined, and a back control 612 to go back to the previous screen or menu. In the screen display of FIG. 6, a route 614 from a current location 616 to a destination 618 is displayed on a map of a geographic area 620. The route 614 of FIG. 6 does not include a shape location.

The shape route control 608 is selected to enter a shape location. The zoom controls 604-606 are used to zoom in and out of the map area before or after selecting the shape route control 608 in different embodiments.

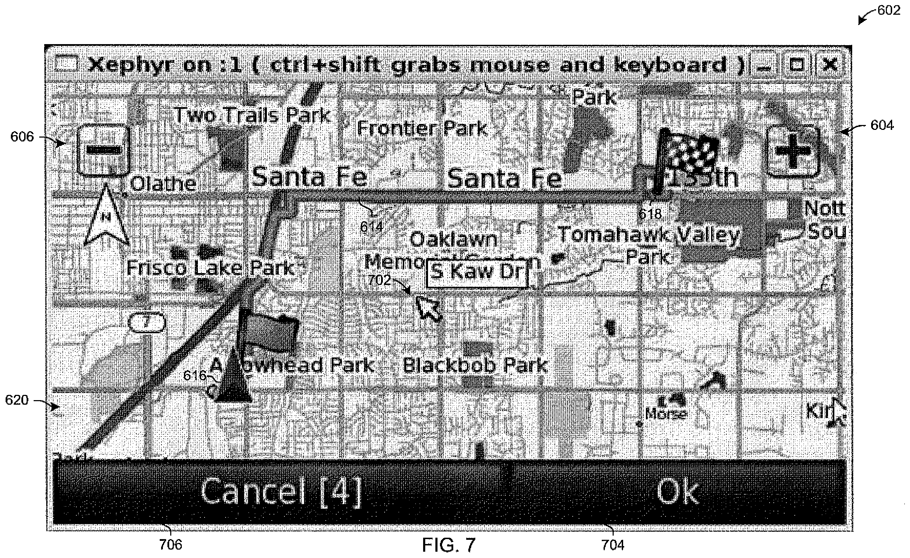

As depicted in FIG. 7, a shape location 702 for South Kaw Drive is selected on the map 620. If the user is done, the OK control 704 may be selected. Otherwise, the cancel control 706 may be selected. In this example, the OK control 704 is selected.

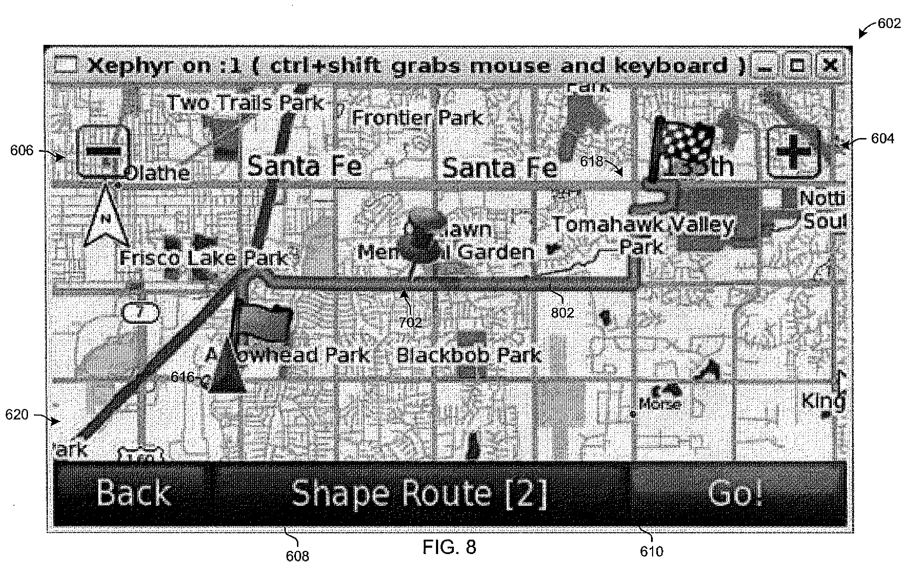

As depicted in FIG. 8, a new route 802 is generated on the map 620 from the current location 616 through the shape location 702 to the destination 618. The user may add another shape location, go back and add a different location, use the existing route, or cancel.

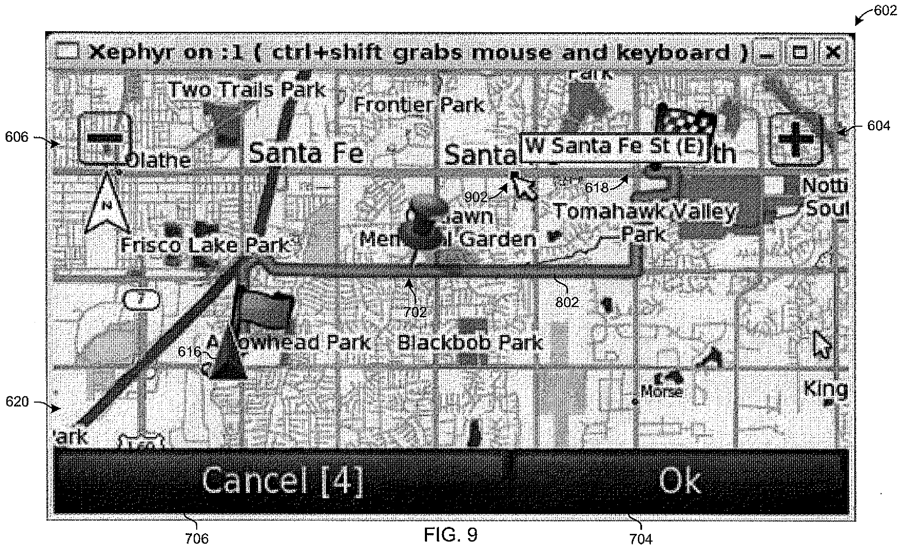

As depicted in FIG. 9, another shape location is to be added to the route. The user adds the other shape location 902 on West Santa Fe from the map 620 and selects the OK control 704.

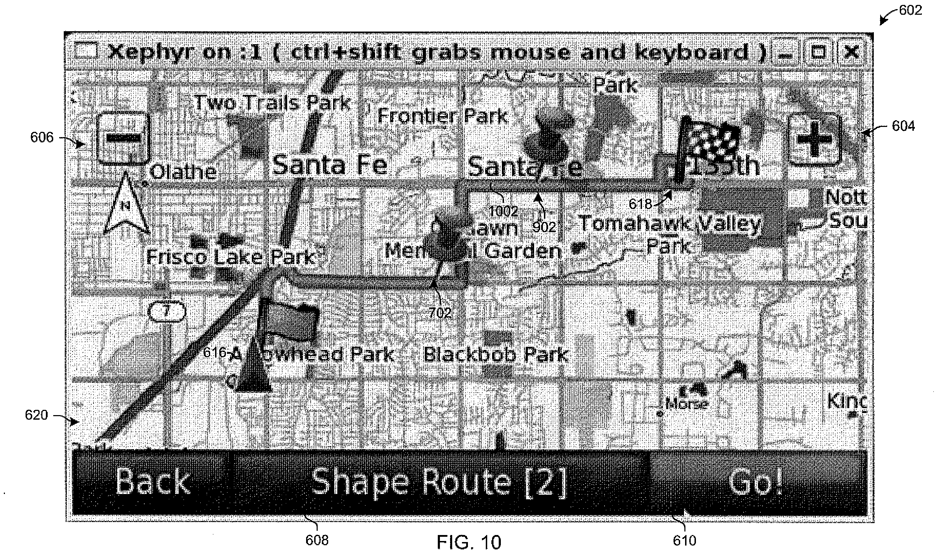

As depicted in FIG. 10, a new route 1002 is generated on the map 620 from the current location 616 through the shape locations 702 and 902 to the destination 618. Other examples exist.

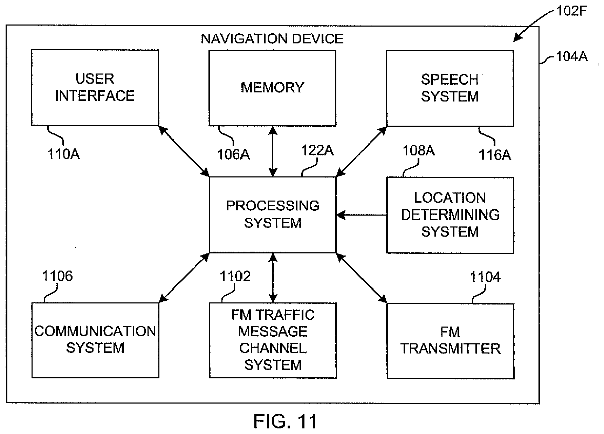

FIG. 11 depicts an exemplary embodiment of another route shaping system 102F with optional components. The route shaping system 102F can be included in a portable navigation device 104A, such as an automobile or other vehicle navigation device, or another navigation system or device.

The route shaping system 102F has the same or similar components as the route shaping system 102 of FIG. 1. In addition, optional components may be included.

An FM traffic message channel (TMC) system 1102 receives wireless information transmitted from an external source. TMC delivers highly accurate and timely traffic and travel information to drivers. Received traffic information may be integrated directly into the route shaping systems and methods. For example, the traffic information may supplement other road and traffic information used for route calculations and enable selection of alternate routes or avoidance of traffic delays or incidents by the route shaping system or a user.

A transmitter 1104 wirelessly transmits audio information from the route shaping system 102F to an external audio system, such as a vehicle-equipped audio system, a home audio system, a portable audio system, or another device equipped with a radio receiver. In one embodiment, the transmitter 1104 is a low power personal-use FM transmitter for transmitting audio information, such as speech, turn-by-turn instructions, navigation commands, and other audio to the external audio system. The transmitted audio information may be reproduced by the speakers of the external audio system. Examples of a transmitter include an FM transmitter, an AM transmitter, a Bluetooth transmitter, a cellular transmitter, or another transmitter. Other examples exist.

A communication system 1106 includes wireless and/or wireline communication systems that enable the route shaping system 102F to transmit and receive data. In one aspect, additional, new, or different map data is transmitted to the route shaping system 102F with or through the communication system 1106. For example, the communication system 1106 may include a USB communication device, a Bluetooth device, an infrared (IR) device, or another device, system, component, or method used to communicate data to or from the route shaping system 102F.

Additional, other, or different optional components may be included in one or more embodiments of a route shaping system. Examples other than the ones described above exist.

It is believed that the present invention and many of its attendant advantages will be understood by the foregoing description, and it will be apparent that various changes may be made in the form, construction and arrangement of the components thereof without departing from the scope of the invention as defined by the following claims.

## Claims

1. A system operable with map data indicative of a road network with road segments each having a road class shaping a route from a starting location to a destination, the system comprising:
an input device for receiving a destination and a shape location to be used for shaping a route from a starting location to the destination through or near the shape location while not routing a user to the shape location as a destination; and
a processing system for determining a route from the starting location to the destination,
wherein the processing system determines an interest area for the shape location,
**characterized in that** the processing system further determines the highest road class of potential road segments through the interest area and calculates a route from the starting location through the interest area to the destination, such that the route includes a selected road segment through the interest area, the selected road segment having the determined highest road class.

2. The system of claim 1, wherein the processing system selects the route based on at least one user preference.

3. A navigation device comprising a system according to any of claims 1 and 2,
wherein the processing system calculates the route from the starting location through the interest area to the destination by calculating a plurality of potential routes from the starting location through the interest area to the destination, the potential routes through the interest area having the determined highest road class; and selecting a route from the starting location to the destination.

4. The navigation device of claim 3, further comprising selecting a shortest route from the potential routes.

5. The navigation device of claim 3, further comprising a location determining system for determining a current location of the navigation device.

6. The navigation device of claim 5, wherein the location determining system comprises a global positioning system receiver for receiving global positioning system (GPS) signals, the processing system processing the GPS signals to determine a current location of the navigation device.

7. The navigation device of claim 3, further comprising a memory coupled to the processing system for storing the map data.

## Patentansprüche

1. System, das mit Kartendaten betrieben werden kann, die für ein Straßennetz mit Straßensegmenten kennzeichnend sind, die jeweils eine Straßenklasse aufweisen, die eine Route von einer Ausgangsposition zu einem Ziel gestaltet, wobei das System aufweist:
eine Eingabevorrichtung zum Empfangen eines Ziels und einer Gestaltungsposition, die zum Gestalten einer Route von einer Ausgangsposition zu dem Ziel durch die Gestaltungsposition oder in der Nähe der Gestaltungsposition verwendet werden soll, ohne einen Benutzer zu der Gestaltungsposition als Ziel zu führen; und
ein Verarbeitungssystem zum Bestimmen einer Route von der Ausgangsposition zu dem Ziel,
wobei das Verarbeitungssystem einen Interessenbereich für die Gestaltungsposition bestimmt,
**dadurch gekennzeichnet, dass** das Verarbeitungssystem ferner die höchste Straßenklasse möglicher Straßensegmente durch den Interessenbereich bestimmt und in der Weise eine Route von der Ausgangsposition durch den Interessenbereich zu dem Ziel berechnet, dass die Route ein ausgewähltes Straßensegment durch den Interessenbereich enthält, wobei das ausgewählte Straßensegment die bestimmte höchste Straßenklasse aufweist.

2. System nach Anspruch 1, bei dem das Verarbeitungssystem die Route auf Basis mindestens einer Benutzerpräferenz auswählt.

3. Navigationsvorrichtung, die ein System nach einem der Ansprüche 1 und 2 aufweist,
wobei das Verarbeitungssystem die Route von der Ausgangsposition durch den Interessenbereich zu dem Ziel berechnet, indem es eine Vielzahl von möglichen Routen von der Ausgangsposition durch den Interessenbereich zu dem Ziel berechnet, wobei die möglichen Routen durch den Interessenbereich die bestimmte höchste Straßenklasse aufweisen; und eine Route von der Ausgangsposition zu dem Ziel auswählt.

4. Navigationsvorrichtung nach Anspruch 3, die ferner das Auswählen einer kürzesten Route aus den möglichen Routen umfasst.

5. Navigationsvorrichtung nach Anspruch 3, die ferner ein Positionsbestimmungssystem zum Bestimmen einer aktuellen Position der Navigationsvorrichtung aufweist.

6. Navigationsvorrichtung nach Anspruch 5, bei der das Positionsbestimmungssystem einen Empfänger für das globale Positionsbestimmungssystem zum Empfangen von Signalen des globalen Positionsbestimmungssystems (GPS) aufweist, wobei das Verarbeitungssystem die GPS-Signale verarbeitet, um eine aktuelle Position der Navigationsvorrichtung zu bestimmen.

7. Navigationsvorrichtung nach Anspruch 3, die ferner einen mit dem Verarbeitungssystem gekoppelten Speicher zum Speichern der Kartendaten aufweist.

## Revendications

1. Système utilisable avec des données cartographiques indiquant un réseau routier avec des segments d'itinéraire ayant chacun une classe d'itinéraire configurant un itinéraire depuis un lieu de départ jusqu'à une destination, le système comprenant :
un dispositif d'entrée pour recevoir une destination et un lieu de configuration à utiliser pour configurer un itinéraire depuis un lieu de départ jusqu'à la destination au moyen, ou près, du lieu de départ tout en n'acheminant pas un utilisateur jusqu'au lieu de configuration en tant que destination ; et
un système de traitement pour déterminer un itinéraire depuis le lieu de départ jusqu'à la destination,
dans lequel le système de traitement détermine une zone digne d'intérêt pour le lieu de configuration,
**caractérisé en ce que** le système de traitement détermine en outre la classe d'itinéraire la plus élevée de segments d'itinéraire potentiels à travers la zone digne d'intérêt et calcule un itinéraire depuis le lieu de départ, à travers la zone digne d'intérêt, jusqu'à la destination de telle sorte que l'itinéraire comprenne un segment d'itinéraire sélectionné à travers la zone digne d'intérêt, le segment d'itinéraire sélectionné ayant la classe d'itinéraire la plus élevée déterminée.

2. Système selon la revendication 1, dans lequel le système de traitement sélectionne l'itinéraire en se basant sur au moins une préférence d'utilisateur.

3. Dispositif de navigation comprenant un système selon l'une quelconque des revendications 1 et 2,
dans lequel le système de traitement calcule l'itinéraire depuis le lieu de départ, à travers la zone digne d'intérêt, jusqu'à la destination en calculant une pluralité d'itinéraires potentiels depuis le lieu de départ à travers la zone digne d'intérêt, jusqu'à la destination, les itinéraires potentiels à travers la zone digne d'intérêt ayant la classe d'itinéraire la plus élevée déterminée ; et en sélectionnant un itinéraire depuis le lieu de départ jusqu'à la destination.

4. Dispositif de navigation selon la revendication 3, comprenant en outre la sélection de l'itinéraire le plus court à partir des itinéraires potentiels.

5. Dispositif de navigation selon la revendication 3, comprenant en outre un système de détermination de position pour déterminer la position actuelle du dispositif de navigation.

6. Dispositif de navigation selon la revendication 5, dans lequel le système de détermination de position comprend un récepteur de système mondial de positionnement pour recevoir des signaux de système mondial de positionnement (GPS), le système de traitement traitant les signaux GPS pour déterminer la position actuelle du dispositif de navigation.

7. Dispositif de navigation selon la revendication 3, comprenant en outre une mémoire couplée au système de traitement pour stocker les données cartographiques.
